# EUROPÄISCHE PATENTSCHRIFT

(11) **EP 0 636 397 B1**
(45) Veröffentlichungstag und Bekanntmachung des Hinweises auf die Patenterteilung: **25.09.1996**
(21) Anmeldenummer: 94111115.5
(22) Anmeldetag: 17.07.1994
(51) Int. Cl.: B01D 25/00, B01D 25/176

(54) **Filterelement für ein Kammer-, Membranfilter oder dergleichen sowie Verfahren zu seiner Herstellung**
Filter element for a chamber, membrane filter or the like and process for its production
Elément de filtre pour un filtre de chambre, de membrane ou similaire et procédé de sa production

(30) Priorität: 28.07.1993 DE 4325235
(43) Veröffentlichungstag der Anmeldung: 01.02.1995
(73) Patentinhaber: JUNKER-FILTER GmbH, D-74889 Sinsheim (DE)
(72) Erfinder: Junker, Jürgen, D-74889 Sinsheim (DE); Schütt, Hubertus, D-75889 Sinsheim (DE)
(74) Vertreter: Ostertag, Reinhard

(56) Entgegenhaltungen:
- EP-A- 0 003 046
- DE-A- 1 961 417
- DE-U- 1 632 176
- GB-A- 1 271 860

## Beschreibung

Die Erfindung betrifft ein Filterelement für ein Kammer-, Membranfilter oder dergleichen gemäß dem Oberbegriff des Anspruches 1 sowie ein Verfahren zu seiner Herstellung.

Bei bekannten Filterelementen für Kammer- und Membranfilter sind die Filtermedium-Zuschnitte, die die einander gegenüberliegenden Stirnflächen des Tragkörpers überdecken, über den Tragkörperrand hinausgeführt und dort durch Schnüre, Drähte, Klammern und dergleichen miteinander verbunden. Das Anbringen der Filtermedium-Zuschnitte ist zeitaufwendig. Auch kann es bei dieser Ausbildung des Filterelementes zu einer "Querfiltration" kommen, das heißt, Filtrat oder Schwebstoffe enthaltende Flüssigkeit wird in seitlicher Richtung zwischen den Platten der Filterpresse nach außen gedrückt. Dies ist im Hinblick auf die Sauberhaltung der Filterpresse aber auch im Hinblick auf gesundheitsgefährdende Filtermedien nachteilig.

Eine derartige Querfiltration ist bei ebenfalls schon im Handel befindlichen Filterelementen ausgeräumt, bei denen die einzelnen Tragkörper eine unmittelbar beim Rand verlaufende Nut zur Aufnahme einer Rundschnurdichtung und eine weitere innerhalb der ersten Nut liegende Nut zur Aufnahme des Randes des Filtertuches aufweisen. Das Filtertuch wird bei einem solchen Filterelement mit seinem Randabschnitt unter Verwendung eines eine breite Klinge aufweisenden Werkzeuges in die zweite Nut hineingeschlagen. Auch ein solches Anbringen des Filtertuch-Zuschnittes ist zeitraubend und erfordert ein hohes Maß an Aufmerksamkeit, insbesondere auch deshalb, weil überstehende Ränder nach dem Einschlagen des Filtertuchrandes sorgfältig entfernt werden müssen, was bei Filtertuchmaterialien aus Glasfaser oder schweißbarem Kunststoffmaterial sehr zeitraubend sein kann.

Durch die vorliegende Erfindung soll daher ein Filterelement gemäß dem Oberbegriff des Anspruches 1 so weitergebildet werden, daß einerseits eine Querfiltration ausgeräumt ist, andererseits das Anbringen des Filtermedium-Zuschnittes auf dem Tragkörper rasch, einfach und sicher erfolgen kann.

Diese Aufgabe ist erfindungsgemäß gelöst durch ein Filterelement mit den im Anspruch 1 angegebenen Merkmalen.

Bei der Erfindung ist es möglich, den Filtermedium-Zuschnitt und den an diesem angebrachten Montagerahmen schon in der Fabrik vollständig fertigzustellen. Der Anwender muß somit keinerlei Schneid- oder Versäuberungsarbeiten durchführen. Das Anbringen eines neuen Filtermedium-Zuschnittes am Tragkörper kann einfach auch ohne Ausbau des Filterelementes aus der Filterpresse erfolgen. Durch das Angießen, Anspritzen, Ankleben oder Anschweißen des Montagerahmens am Rand des Filtermediums ist zugleich gewährleistet, daß man an dieser Befestigungsstelle eine Dichtstelle erhält, die ein Wandern von Filtrat in der Filtermediumebene nach außen verhindert.

Die Erfindung läßt sich an den verschiedensten Filtereinrichtungen verwenden, so z.B. für Filtertücher für Kammer- oder Membranfilterplatten von Filterpressen, die schon mit einer eingefrästen Tuchbefestigungsnut versehen sind, wie sie obenstehend schon erwähnt wurde, oder als Bespannung für Drucknutschen, Planfilter, Vakuumtellernutschen oder Kastennutschen, Scheibenfiltersegmente oder Spezialfiltersegmente, die schon mit einer eingefrästen Tuchbefestigungsnut versehen sind.

Bevorzugte Einsatzgebiete für erfindungsgemäße Filterelemente sind Fest/Flüssigkeitsfilter im Bereich der chemischen Industrie, der pharmazeutischen Industrie, der petrochemischen Industrie, der Lebens- und Getränkeindustrie, der Papierindustrie, der Kunststoffaufbereitungsindustrie, der industriellen und kommunalen Abwasserbehandlung sowie der Wasseraufbereitung.

Mit der Erfindung erhält man nicht nur eine auch in seitlicher Richtung leckagefreie Filtration und erhebliche Einsparungen an Arbeit und Zeit bei der Neubespannung eines Tragkörpers, es ist auch ein optimaler, faltenfreier Paßsitz der Bespannung des Tragkörpers mit dem Filtermedium-Zuschnitt gewährleistet.

Da eine Querfiltration sicher vermieden ist, sind Umweltgefährdungen, Gesundheitsprobleme und Geruchsbelästigungen sicher vermieden. MAK-Werte können problemlos eingehalten werden. Auch ist der Verbrauch an Waschwasser für die Filterpresse vermindert, und man erhält auch weniger zu reinigende Abwässer. Schließlich erhält man auch eine Reduzierung des leckstrombedingten Geräuschpegels, wenn mit gasförmigen Medien gearbeitet wird, so z.B. beim Trockenblase von Produkten in einer geschlossenen Filterpresse.

Wie schon dargelegt, erfolgt das Montieren und Demontieren des Filtermedium-Zuschnittes sehr einfach, kostengünstig, ohne Justierprobleme und faltenfrei. Für eine Neubespannung braucht ein Filterelement nicht aus der Filterpresse ausgebaut zu werden. Ein Filterelement kann in der Presse und in vertikaler Ausrichtung mit einem neuen Filtermedium-Zuschnitt versehen werden.

Das Material für den Montagerahmen und das eigentliche Filtermedium können jeweils so gewählt werden, wie dies von der Verfahrenstechnik und der Anwendungstechnik im Einzelfalle notwendig ist.

Die Härte und chemische und thermische Beständigkeit des Materiales für den Montagerahmen kann ebenfalls im Hinblick auf den jeweils durchzuführenden Filtrationsprozeß gewählt werden.

Da der Montagerahmen am Filtermedium-Zuschnitt angegossen, angespritzt, angeklebt oder angeschweißt ist, hat man am Rand des Filtermedium-Zuschnittes keinerlei mechanische Schwächungen, wie sie z.B. durch Nadeleinstiche hervorgerufen werden. Durch Einstichlöcher könnten auch Feststoffpartikel in das Filtrat gelangen.

Ein weiterer Vorteil der erfindungsgemäßen Lösung ist der, daß man ohne Abwandlung des Tragkörpers Filtermedien unterschiedlicher Dicke verwenden kann, sofern diese nur mit dem zum Tragkörper passenden Montagerahmen versehen sind. Bei herkömmlichen Filterelementen mit einer eingefrästen Tuchbefestigungsnut kann in der Regel nur eine Kombination aus einem Filtertuch und einem hierzu passenden Rundschnurring verwendet werden.

Schließlich kann man bei Anwendung der Erfindung auch asymmetrische Randkonturen des Filtermedium-Zuschnittes auf einfache Weise faltenfrei realisieren.

Vorteilhafte Weiterbildungen der Erfindung sind in Unteransprüchen angegeben.

Verwendet man für den Montagerahmen ein elastisch nachgiebiges Material gemäß Anspruch 2, so hat man eine besonders gute Abdichtung im Bereich der Montagenut auch dann, wenn diese geringfügig verschmutzt sein sollte. Auch erhält man auf diese Weise eine etwas federnde Randbefestigung des Filtermedium-Zuschnittes und eine zuverlässige und doch leicht lösbare Verrastung des Montagerahmens in einer hinterschnittenen Montagenut.

Verwendet man gemäß Anspruch 3 einen im wesentlichen starren Montagerahmen, so ist die Handhabung und das Anbringen des Filtermedium-Zuschnittes am Tragkörper besonders einfach.

Gemäß den Ansprüchen 9 und 10 kann man den Montagerahmen auch in situ erzeugen und so von der Erfindung auch bei Tragkörpern Gebrauch machen, die schon im Einsatz sind und keine einem Standard entsprechende Montagenut aufweisen.

Nachstehend wird die Erfindung anhand von Ausführungsbeispielen unter Bezugnahme auf die Zeichnung näher erläutert. In dieser zeigen:
- Figur 1:: eine Aufsicht auf ein Filterelement, bei welchem in der rechten Hälfte die Filtertuchbespannung abgenommen ist;
- Figur 2:: einen vergrößerten transversalen Schnitt durch einen Randbereich einer Trägerplatte des Filterelementes nach Figur 1;
- Figuren 3 und 4:: verschiedene Ausführungsformen für den Querschnitt eines Montagerahmens, der an den Filtertuch-Zuschnitt des Filterelementes nach Figur 1 angeformt ist; und
- Figur 5:: eine schematische Darstellung eines Abgabekopfes, unter dessen Verwendung in situ an einem Filtertuch-Zuschnitt ein Montagerahmen erzeugt werden kann.

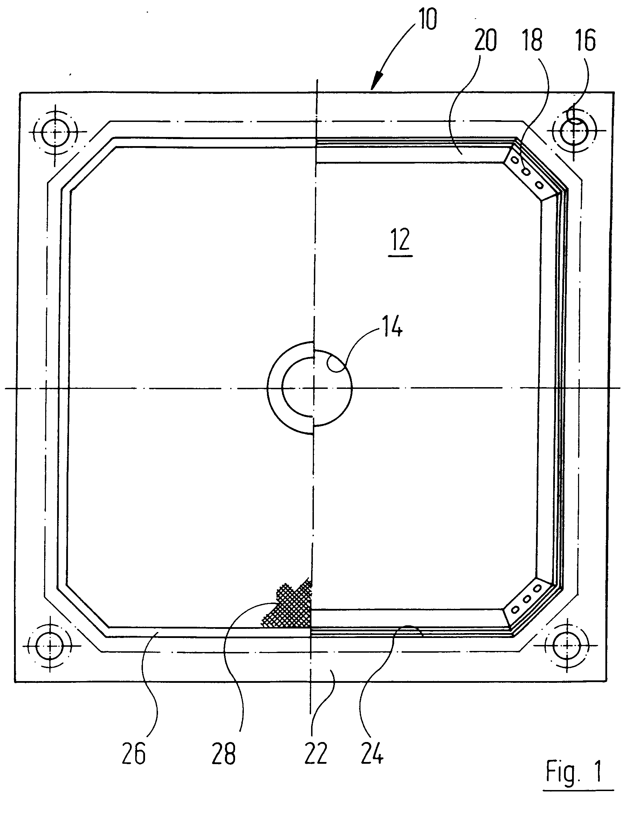

In Figur 1 ist mit 10 insgesamt eine Trägerplatte bezeichnet, die mit einer ihren größten Teil überdeckenden Vertiefung 12 versehen ist.

Eine mittige Durchgangsöffnung 14 dient zum Zuführen von Schwebstoffe enthaltender zu filtrierender Flüssigkeit, während in den Eckabschnitten der Trägerplatte 10 vorgesehene Öffnungen 16 zum Abführen von Filtrat und/oder Zuführen von Waschflüssigkeit und/oder Zuführen von gasförmigen Behandlungsmedien wie Trockenluft dienen. Die Öffnungen 16 stehen beispielsweise über Öffnungen 18 mit der Vertiefung 12 in Verbindung, die in der schräg abfallenden Randwand 20 der Vertiefung 12 ausgebildet sind.

Im außerhalb der Vertiefung 12 liegenden Randabschnitt 22 der Trägerplatte 10 ist parallel die Vertiefung 12 umlaufend eine Montagenut 24 vorgesehen. In dieser sitzt formschlüssig ein Montagerahmen 26, der an den Rand eines Filtertuch-Zuschnittes 28 angeformt ist, z.B. angegossen, angespritzt, angeklebt oder angeschweißt ist. Gleich, welche dieser Anbringungsarten gewählt wird, wichtig ist nur, daß die Porosität des Filtertuch-Zuschnittes an der Befestigungsstelle unterbrochen ist, so daß Flüssigkeit im Filtertuch nicht über die Befestigungsstelle nach außen wandern kann.

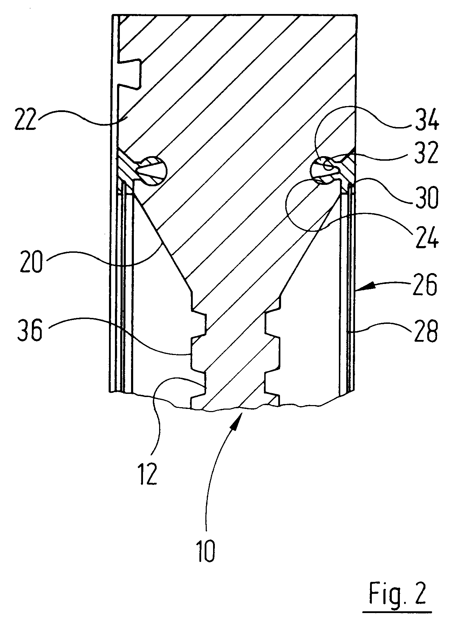

Figur 2 zeigt Einzelheiten der Befestigung des Randes des Filtertuch-Zuschnittes 28 an der Trägerplatte 10. Beim betrachteten Ausführungsbeispiel ist der Montagerahmen 26 aus einem im wesentlichen starren elastischen Kunststoffmaterial gespritzt und hat einen nach außen weisenden trapezförmigen Tuchhalteabschnitt 30 sowie einen zylindrischen, durch eine Längsnut 32 in zwei Federarme unterteilten, in die Montagenut 24 elastisch eingeclipsten Halteabschnitt 34.

Wie aus Figur 2 ferner ersichtlich, ist die Trägerplatte 10 symmetrisch zu einer Mittelebene ausgebildet, so daß dicht nebeneinander gestellte Trägerplatten jeweils flache Filterkammern begrenzen, die durch einen Filtertuch-Zuschnitt 28 voneinander getrennt sind.

Um bei Druckbeaufschlagung dieser Filterkammern ein flächiges Anliegen des Filtertuches am Boden der Vertiefungen 12 zu verhindern, sind letztere mit angeformten Vorsprüngen 36 versehen.

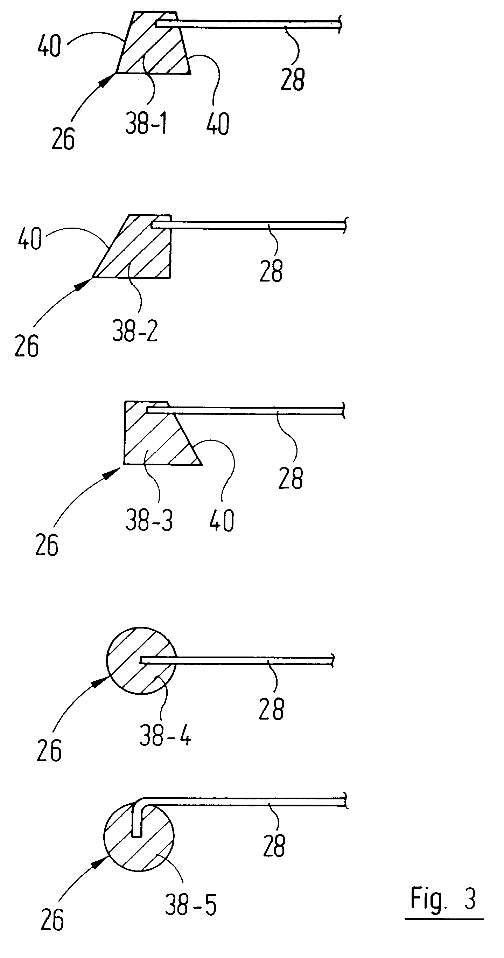

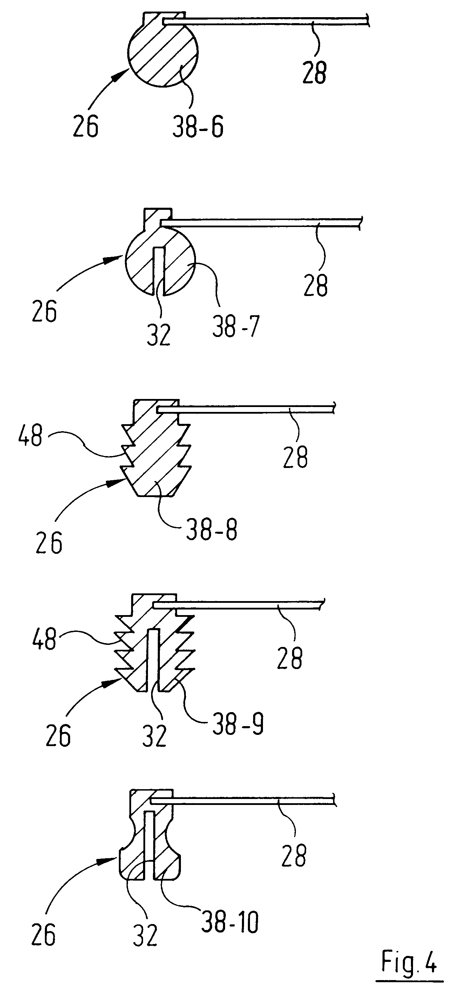

Die Figuren 3 und 4 zeigen abgewandelte Querschnittsformen für den Montagerahmen 26. Es versteht sich, daß die Montagenut 24 jeweils hierzu komplentäre Geometrie aufweist. Die verschiedenen Querschnittsformen sind mit 38-1 bis 38-10 durchnumeriert.

Die Querschnittsformen 38-1 bis 38-3 haben jeweils schräggestellte Seitenflächen 40, die zusammen mit einer entsprechend schräggestellten Wand der Montagenut 24 zur Aufnahme auch großer Drehmomente dienen können. Dabei ist jeweils mit zu berücksichtigen, daß die freien Stirnflächen des Montagerahmens 26 mit der Stirnfläche des Randabschnittes 22 fluchtet, so daß bei zusammengefahrenen Filterelementen durch das benachbarte Filterelement eine zusätzliche Drehmomentabstützung der freien Stirnfläche des Montagerahmens 26 erfolgt, sei es durch den Wandabschnitt 22 des benachbarten Filterelementes direkt oder über eine einen Halterahmen aufweisende Membran, die zum kraftschlüssigen Auspressen des Filterkuchens auf dem benachbarten Filterelement vorgesehen ist.

Die in den Figuren 3 und 4 wiedergegebenen nicht hinterschnittenen Querschnittsformen eignen sich gleichermaßen für Montagerahmen aus starrem und aus elastisch nachgiebigem Material. Bei hinterschnittenen Montagenuten sind wieder Längsschlitze 32 vorgesehen, wie obenstehend schon beschrieben wurde.

Wünscht man hinterschneidungsfreie Montagenuten 24, trotzdem aber einen festen Sitz des Montagerahmens 26 in der Montagenut, so kann man den Querschnitt des Montagerahmens 26 gemäß den Ausführungsbeispielen 38-8 und 38-9 auch mit widerhakenähnlichen Rippen 48 wählen.

Bei den oben beschriebenen Ausführungsbeispielen wird der Filtertuch-Zuschnitt 28 in der Filterfabrik auf die jeweils richtige Randkontur geschnitten und auch schon in der Fabrik mit dem Montagerahmen 26 versehen.

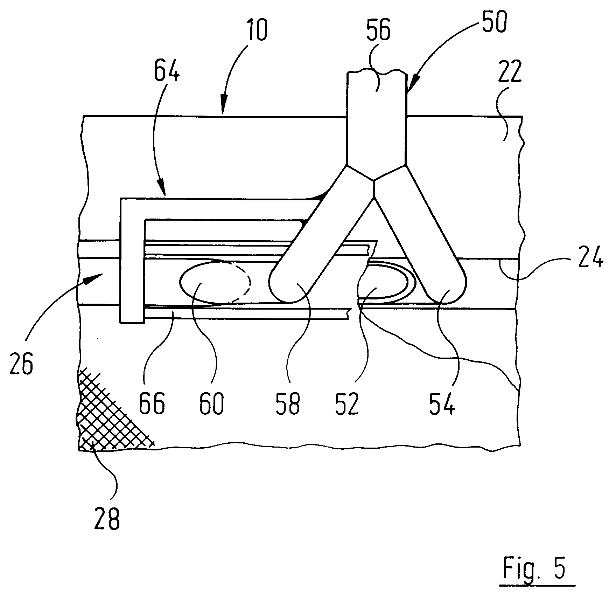

Für manche Anwendungsfälle kann es vorteilhaft sein, den Montagerahmen auch erst an Ort und Stelle anzubringen, z.B. bei schon vorhandenen Trägerplatten, die mit keinen Standardquerschnitt aufweisenden oder durch harte Einsatzbedingungen schon beschädigten Filtertuch-Befestigungsnuten versehen sind. Dies kann mit dem in Figur 5 gezeigten, insgesamt mit 50 bezeichneten Abgabekopf auf einfache Weise erfolgen.

Dieser hat ein erstes in die Haltenut 24 verschiebbar eingreifendes, eine in Nut-Längsrichtung und nach oben gerichtete Abgabeöffnung aufweisendes Abgabestück 52, welches über einen ersten Krümmer 54 mit einem Speisestück 56 verbunden ist. Letzteres wird von einer nicht näher gezeigten Fördereinrichtung mit flüssigen oder breiigem, ggf. mit Treibmittel versehenem Kunststoffmaterial beaufschlagt. Über einen zweiten Krümmer 58 ist mit dem Speisestück 56 ein zweites Abgabestück 60 verbunden, dessen nach unten weisende Abgabeöffnung in Wirklichkeit in zur Ebene der Trägerplatte 10 senkrechter Richtung im wesentlichen mit der Abgabeöffnung des Abgabestückes 52 fluchtet und welches den Rand eines mit einem Montagerahmen zu versehenden Filtertuch-Zuschnittes 28 übergreift. Nur zur besseren Darstellung sind die beiden Abgabestücke 52 und 60 in Figur 5 versetzt dargestellt, in der Praxis wird der Abgabekopf 50 in Nutlängsrichtung möglichst kurz gebaut, damit er durch gekrümmte Abschnitte der Haltenut 24 bewegbar ist.

Das Anbringen eines Montagerahmens 26 kann dann wie folgt durchgeführt werden:

Der Filtertuch-Zuschnitt 28 wird z.B. mit zwei Klebestreifenstücken bei seiner oberen Längskante richtig ausgefluchtet über der Trägerplatte 10 angebracht, wobei der Rand des Zuschnittes bei dieser Ausführungsform vorzugsweise etwas über die Montagenut 24 hinausgeführt wird, wie in Figur 1 durch die strichpunktierte Linie 62 angedeutet. Dann fährt man mit dem Abgabekopf 50 bei eingeschalteter Materialzufuhr längs der vertikalen und der unteren horizontalen Abschnitte der Montagenut 24, wobei die Montagenut 24 mit Kunststoffmaterial ausgefüllt wird und auf der Außenseite des Filtertuches ein fluchtender Streifen aus Kunststoffmaterial abgelegt wird. Die beiden Kunststoffmaterial-Teilmengen wachsen durch das poröse bzw. stellenweise perforierte Filtertuch hindurch zusammen.

Ggf. kann der Abgabekopf 50 einen nachgezogenen Niederhalter 64 mit zu beiden Seiten des aufgespritzten Kunststoffstreifens laufenden Andrückleisten 66 aufweisen, um ein Abheben des Filtertuchrandes beim und unmittelbar nach dem Anspritzen des Montagerahmens 26 zu vermeiden.

Nachdem der Montagerahmen 26 so auf drei Seiten geschlossen wurde, werden die bei der oberen Längskante des Zuschnittes vorgesehenen Klebestreifen entfernt und der Montagerahmen 26 oben vollends geschlossen.

Als Materialien für den Filtertuch-Zuschnitt 28 kommen je nach Anwendung und Einsatz Materialien aus der nachstehenden Gruppe zur Verwendung: Gewebe, Vliese oder Nadelfilze aus Monofil-, Multifil- oder Stapelfasern und deren Kombinationen. Dabei können die Fasern selbst aus PP, PAN, PA, PES, PE, PVDF, PPS, PVDCL, PEEK, PTFE, Aramit, Glas, Edelstahl oder Keramik bestehen.

Als Material zur Herstellung des Montagerahmens 26 kommen je nach dem eingesetzten Verfahren und nach der jeweiligen Anwendung, insbesondere je nach den chemischen und thermischen Belastungen Materialien aus der nachstehenden Gruppe in Frage: Polyurethan, Silikon, Epoxidharz, PP, PAN, PA, PES, PE, PVC, PVDF, PPS, PVDCL, PTFE oder keramisches Material.

## Patentansprüche

1. Filterelement für ein Kammer- oder Membranfilter, mit einem im wesentlichen starren plattenförmigen Tragkörper (10), in welchem Öffnungen (14, 16, 18) zum Zuführen von zu filtrierendem Medium sowie zum Abführen von Filtrat vorgesehen sind, mit einem flexiblen Filtermedium-Zuschnitt (28) und mit Befestigungsmitteln zum lösbaren Anbringen des Filtermedium-Zuschnittes (28) am Tragkörper (10), dadurch gekennzeichnet, daß die Befestigungsmittel aufweisen: einen an den Rand des Filtermedium-Zuschnittes (28) angegossenen, angespritzten, angeklebten oder angeschweißten Montagerahmen (26) sowie eine am Tragkörper (10) vorgesehene umlaufende Montagenut (24), welche in Verlauf und Querschnitt dem Montagerahmen (26) angepaßt ist.

2. Filterelement nach Anspruch 1, dadurch gekennzeichnet, daß der Montagerahmen (26) aus elastisch nachgiebigem Material gefertigt ist, z.B. einem synthetischen Elastomermaterial mit einer Shore-Härte von etwa 70°.

3. Filterelement nach Anspruch 1, dadurch gekennzeichnet, daß der Montagerahmen (26) aus im wesentlichen starrem elastischem Material gefertigt ist.

4. Filterelement nach Anspruch 3, dadurch gekennzeichnet, daß der Montagerahmen (26) durch mindestens einen in einem Halteabschnitt (34) vorgesehenen Längsschlitz (32) in mindestens zwei elastisch gegeneinander bewegbare Arme unterteilt ist.

5. Filterelement nach einem der Ansprüche 1 bis 4, dadurch gekennzeichnet, daß die Montagenut (24) hinterschnitten ist.

6. Filterelement nach einem der Ansprüche 1 bis 5, dadurch gekennzeichnet, daß die Montagenut (24) und der Montagerahmen (26) drehmomentaufnehmende Wandflächen (40) aufweisen.

7. Filterelement nach einem der Ansprüche 1 bis 6, dadurch gekennzeichnet, daß der Montagerahmen (26) aus einem Material besteht, welches aus der nachstehenden Gruppe ausgewählt ist: Polyurethan, Silikon, Epoxidharz, PP, PAN, PA, PES, PE, PVC, PVDF, PPS, PVDCL, PTFE, Keramik.

8. Filterelement nach einem der Ansprüche 1 bis 7, dadurch gekennzeichnet, daß der Filtermedium-Zuschnitt (28) aus einem Material besteht, welches aus der nachstehenden Gruppe ausgewählt ist: Gewebe, Vliese oder Nadelfilze aus Monofil-, Multifil-, Stapelfasern und deren Kombinationen, wobei das Fasermaterial aus PP, PAN, PA, PES, PE, PVDF, PPS, PVDCL, PEEK, PTFE, Aramit, Glas, Edelstahl oder Keramik besteht.

9. Verfahren zur Herstellung eines Filterelementes nach einem der Ansprüche 1 bis 8, gekennzeichnet durch folgende Verfahrensschritte:
a) die Montagenut (24) wird bis über ihre freien Ränder überstehend mit einem härtbaren Rahmenmaterial gefüllt;
b) der Filtermedium-Zuschnitt (28) wird auf das aufgebrachte Rahmenmaterial aufgelegt;
c) der auf dem Rahmenmaterial liegende, einzubettende Streifen des Filtermedium-Zuschnittes (28) wird gegen das härtbare Rahmenmaterial vorgeschoben, wobei dem einzubettenden Streifen benachbarte streifenförmige Abschnitte des Filtermedium-Zuschnittes (28) fest gegen die Oberfläche des Tragkörpers (10) gedrückt werden, z.B. unter Verwendung einer Quetschrolle oder eines Quetschrahmens.

10. Verfahren zur Herstellung eines Filterelementes nach einem der Ansprüche 1 bis 8, gekennzeichnet durch folgende Verfahrensschritte:
a) der Filtermedium-Zuschnitt (28) wird im oberen Abschnitt z.B. unter Verwendung von Klebestreifen provisorisch an der Trägerplatte (10) befestigt;
b) in die Montagenut (24) des Tragkörpers (10) wird in Umfangsrichtung fortschreitend härtbares Kunststoffmaterial eingefüllt, und im wesentlichen gleichzeitig wird auf den fluchtenden Abschnitt der Außenseite des Filtermedium-Zuschnittes (28) härtbares Rahmenmaterial aufgetragen.

11. Verfahren nach Anspruch 10, dadurch gekennzeichnet, daß das Aufbringen von Rahmenmaterial unter Verwendung eines Abgabekopfes (50) erfolgt, der ein in die Montagenut (24) eingreifendes erstes Abgabestück (52) und ein mit diesem mitbewegtes, den Rand des Filtermedium-Zuschnittes (28) übergreifendes zweites Abgabestück (60) aufweist.

12. Verfahren nach Anspruch 11, dadurch gekennzeichnet, daß mit dem Abgabekopf (50) ein mit dem Filtermedium-Zuschnitt (28) zusammenarbeitender Niederhalter (64) mitbewegt wird.

## Claims

1. Filter element for a chamber filter or diaphragm filter, having an essentially rigid, plate-shaped carrying body (10) in which apertures (14, 16, 18) for feeding in medium to be filtered and for conducting away filtrate are provided, having a flexible filter medium blank (28) and having fastening means for the detachable fitting of the filter medium blank (28) to the carrying body (10), characterized in that the fastening means have: a mounting frame (26) which is cast, injection-moulded, glued or heat-sealed onto the edge of the filter medium blank (28), and also a circumferential mounting groove (24) which is provided on the carrying body (10) and is adapted, in shape and cross-section, to the mounting frame (26).

2. Filter element according to claim 1, characterized in that the mounting frame (26) consists of elastically yielding material, for example a synthetic elastomeric material having a Shore hardness of about 70°.

3. Filter element according to claim 1, characterized in that the mounting frame (26) is produced from essentially rigid, elastic material.

4. Filter element according to claim 3, characterized in that the mounting frame (26) is subdivided, by at least one elongated slot (32) provided in a holding section (34), into at least two arms which can be moved elastically in relation to one another.

5. Filter element according to one of claims 1 to 4, characterized in that the mounting groove (24) is undercut.

6. Filter element according to one of claims 1 to 5, characterized in that the mounting groove (24) and the mounting frame (26) have torque-absorbing wall faces (40).

7. Filter element according to one of claims 1 to 6, characterized in that the mounting frame (26) consists of a material which is selected from the following group: polyurethane, silicon, epoxy resin, PP, PAN, PA, PES, PE, PVC, PVDF, PPS, PVDCL, PTFE, ceramics.

8. Filter element according to one of claims 1 to 7, characterized in that the filter medium blank (28) consists of a material which is selected from the following group: woven fabrics, non-woven fabrics or needle felts made from monofilament, multifilament or staple fibres and combinations thereof, the fibrous material consisting of PP, PAN, PA, PES, PE, PVDF, PPS, PVDCL, PEEK, PFTE, aramite, glass, high-grade steel, or ceramics.

9. Process for manufacturing a filter element according to one of claims 1 to 8, characterized by the following process steps:
a) the mounting groove (24) is filled with a hardenable frame material until the latter protrudes above its exposed edges;
b) the filter medium blank (28) is placed on the frame material applied.
c) that strip of the filter medium blank (28) which lies on the frame material and is to be embedded, is thrust forward against the hardenable frame material, strip-shaped sections of the filter medium blank (28) which adjoin the strip to be embedded being firmly pressed against the upper face of the carrying body (10), for example using a squeezing roller or squeezing frame.

10. Process for manufacturing a filter element according to one of claims 1 to 8, characterized by the following process steps:
a) the filter medium blank (28) is temporarily fastened to the carrier plate (10) in the upper section, for example using adhesive strips;
b) plastics material, which can be progressively hardened in the peripheral direction, is poured into the mounting groove (24) in the carrying body (10) and, essentially at the same time, hardenable frame material is applied to the aligning section of the outside of the filter medium blank (28).

11. Process according to claim 10, characterized in that the application of frame material is carried out using a discharging head (50) which has a first discharging piece (52) which engages in the mounting groove (24), and a second discharging piece (60) which can be moved in conjunction with the said first discharging piece and engages over the edge of the filter medium blank (28).

12. Process according to claim 11, characterized in that a holding-down device (64), which cooperates with the filter medium blank (28), is moved in conjunction with the discharging head (50).

## Revendications

1. Elément filtrant pour un filtre à chambre ou à membrane, comportant un plateau (10) de support sensiblement rigide, dans lequel sont prévues des ouvertures (14, 16, 18) d'amenée de fluide à filtrer ainsi que d'évacuation du filtrat, comportant une pièce (28) découpée flexible d'agent filtrant et des moyens de fixation pour monter de manière amovible la pièce (28) découpée d'agent filtrant sur le support (10), caractérisé en ce que les moyens de fixation comportent: un cadre (26) de montage coulé, moulé par injection, collé ou soudé sur le bord de la pièce (28) découpée d'agent filtrant, ainsi qu'une rainure (24) de montage qui est prévue sur le pourtour du support (10) et dont le tracé et la section transversale sont adaptés au cadre (26) de montage.

2. Elément filtrant suivant la revendication 1, caractérisé en ce que le cadre (26) de montage est fabriqué en un matériau qui peut céder élastiquement, par exemple en un matériau élastomère synthétique ayant une dureté Shore d'environ 70°.

3. Elément filtrant suivant la revendication 1, caractérisé en ce que le cadre (26) de montage est fabriqué en un matériau élastique sensiblement rigide.

4. Elément filtrant suivant la revendication 3, caractérisé en ce que le cadre (26) de montage est subdivisé, par au moins une fente (32) longitudinale ménagée dans la partie (34) de maintien, en au moins deux bras qui peuvent être déplacés élastiquement l'un vers l'autre.

5. Elément filtrant suivant l'une des revendications 1 à 4, caractérisé en ce que la rainure (24) de montage est en contre-dépouille.

6. Elément filtrant suivant l'une des revendications 1 à 5, caractérisé en ce que la rainure (24) de montage et le cadre (26) de montage comportent des faces (40) de paroi qui absorbent des couples de rotation.

7. Elément filtrant suivant l'une des revendications 1 à 6, caractérisé en ce que le cadre (26) de montage est en un matériau sélectionné dans le groupe suivant: polyuréthanne, silicone, résine époxy, PP, PAN, PA, PES, PE, PVC, PVDF, PPS, PVDCL, PTFE ou céramique.

8. Elément filtrant suivant l'une des revendications 1 à 7, caractérisé en ce que la pièce (28) découpée d'agent filtrant est en un matériau sélectionné dans le groupe suivant: tissu tissés, tissus non tissés ou feutre tissé de fibres monofil, multifil ou artificielles et leurs combinaisons. Le matériau des fibres étant en PP, PAN, PA, PES, PE, PVDF, PPS, PVDCL, PEEK, PTFE, aramide, verre, acier fin ou céramique.

9. Procédé de fabrication d'un élément filtrant suivant l'une des revendications 1 à 8, caractérisé par les étapes opératoires suivantes:
a) la rainure (24) de montage est remplie jusqu'au-dessus de ses bords libres d'un matériau de cadre durcissable;
b) la pièce (28) découpée d'agent filtrant est placée sur le matériau du cadre qui a été déposé;
c) la bande de la pièce (28) découpée d'agent filtrant à enrober qui se trouve sur le matériau du cadre est avancée contre le matériau du cadre, des parties en forme de bande de la pièce (28) découpée d'agent filtrant, qui sont voisines de la bande à enrober, sont poussées solidement contre la surface du support (10), par exemple en utilisant un rouleau de serrage ou un cadre de serrage.

10. Procédé de fabrication d'un élément filtrant suivant l'une des revendications 1 à 8, caractérisé par les étapes opératoires suivantes:
a) la partie supérieure de la pièce (28) découpée d'agent filtrant est fixée provisoirement au plateau (10) de support, par exemple en utilisant des rubans adhésifs;*
b) il est versé en continu dans la rainure (24) de montage du support (10), dans la direction du pourtour, de la matière plastique durcissable, et, sensiblement en même temps, du matériau de cadre durcissable est déposé sur la partie en alignement de la face extérieure de la pièce (28) découpée d'agent filtrant.

11. Procédé suivant la revendication 10, caractérisé en ce que le dépôt de matériau du cadre s'effectue en utilisant une tête (50) de distribution qui comporte une première pièce (52) de distribution qui pénètre dans la rainure (24) de montage et une deuxième pièce (60) de distribution qui est déplacée conjointement avec la première et qui empiète sur le bord de la pièce (28) découpée d'agent filtrant.

12. Procédé suivant la revendication 11, caractérisé en ce qu'un serreflanc (64) qui coopère avec la pièce (28) découpée d'agent filtrant est déplacé conjointement avec la tête (50) de distribution.
